(19) **Europäisches Patentamt**
**European Patent Office**
**Office européen des brevets**

(11) **EP 2 316 861 A1**

(12) **EUROPÄISCHE PATENTANMELDUNG**

(43) Veröffentlichungstag:
**04.05.2011 Patentblatt 2011/18**

(21) Anmeldenummer: **09174921.8**

(22) Anmeldetag: **03.11.2009**

(51) Int Cl.:
*C08C 19/02* (2006.01)     *C08C 19/08* (2006.01)
*C08F 2/22* (2006.01)     *C08F 4/40* (2006.01)
*C08F 4/42* (2006.01)     *C08F 4/60* (2006.01)
*C08F 20/44* (2006.01)     *C08L 9/02* (2006.01)
*C08L 15/00* (2006.01)

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **LANXESS Deutschland GmbH**
**51369 Leverkusen (DE)**

(72) Erfinder:
• **Brandau, Sven**
  **41542 Dormagen (DE)**
• **Klimpel, Michael**
  **67760 Gambsheim (FR)**
• **Magg, Hans**
  **51515 Kürten (DE)**

(54) **Nitrilkautschuke**

(57)     Durch Verwendung eines verbesserten Eisenbasierten Redoxsystems lassen sich spezielle neue, optional hydrierte Nitrilkautschuke herstellen, die sich durch eine einheitlichere Monomerverteilung, einen geringeren Anteil an Langkettenverzweigungen und somit verbesserte Fließeigenschaften und gleichzeitig sehr gute Eigenschaften bei der Verarbeitung auszeichnen.

EP 2 316 861 A1

**Beschreibung**

Die Erfindung betrifft ein Verfahren zur Herstellung neuer, gegebenenfalls hydrierter Nitrilkautschuke, diese gegebenenfalls hydrierten Nitrilkautschuke als solche sowie diese enthaltende vulkanisierbare Mischungen und ferner ein Verfahren zur Herstellung von Vulkanisaten aus diesen Mischungen sowie die dabei erhaltenen Vulkanisate.

Unter Nitrilkautschuken, abgekürzt auch als "NBR" bezeichnet, werden Kautschuke verstanden, bei denen es sich um Co- oder Terpolymere aus mindestens einem $\alpha,\beta$-ungesättigten Nitril, mindestens einem konjugierten Dien und gegebenenfalls einem oder mehreren weiteren copolymerisierbaren Monomeren handelt. Hydrierter Nitrilkautschuk, abgekürzt auch als "HNBR" bezeichnet, wird durch Hydrierung von Nitrilkautschuk hergestellt. Entsprechend sind in HNBR die C=C Doppelbindungen der einpolymerisierten Dieneinheiten ganz oder teilweise hydriert. Der Hydriergrad der einpolymerisierten Dieneinheiten liegt üblicherweise in einem Bereich von 50 bis 100%.

Verfahren zur Herstellung solcher Nitrilkautschuke sind bekannt, siehe z.B. Ullmann's Encyclopedia of Industrial Chemistry, VCH Verlagsgesellschaft, Weinheim, 1993, S. 255-261. Die Polymerisation zu den Nitrilkautschuken wird üblicherweise als Emulsionspolymerisation durchgeführt und kann radikalisch durch Azoinitiatoren, Persulfate, organische Peroxide oder Redoxsysteme gestartet werden. In der og. Literaturstelle werden Redox-Systeme als überwiegend eingesetzte Initiatorsysteme beschrieben, z.B. in Form von Mischungen organischer Peroxide, Hydroperoxide oder Persulfate als Oxidationsmitteln mit Reduktionsmitteln wie Natriumdithionit oder Rongalit (Natrium Formaldehydsulfoxylat). Metallsalze werden dabei optional als Kokatalysator verwendet, bevorzugt unter Zusatz geeigneter Komplexbildner wie Natrium-Ethylendiamintetraacetat, Natrium-Nitrilotriacetat, Isophtalsäure, Trinatriumphosphat oder Tetrakaliumdiphsophat. Ob und gegebenenfalls welchen Einfluß das Initiatorsystem auf die Eigenschaften des Kautschuks besitzt wurde nicht untersucht und findet keinerlei Beachtung.

In EP-A-0 692 496**,** EP-A-0 779 301 **und** EP-A-0 779 300 der Zeon Corporation werden jeweils Nitrilkautschuke auf Basis eines ungesättigten Nitrils und eines konjugierten Diens beschrieben. Gemeinsam ist allen Nitrilkautschuken, dass sie 10-60 Gew.% ungesättigtes Nitril und eine Mooney-Viskosität im Bereich von 15-150 bzw. gemäß EP-A-0 692 496 von 15-65 besitzen und alle mindestens 0,03 mol einer speziellen $C_{12}$-$C_{16}$-Alkylthio-Gruppe pro 100 mol Monomer-Einheiten aufweisen. Die Herstellung der Nitrilkautschuke erfolgt jeweils in Gegenwart eines entsprechend aufgebauten $C_{12}$-$C_{16}$-Alkylthiols als Molekulargewichtsregler, der als "Chain transfer agent" fungiert und somit als Endgruppe in die Polymerketten eingebaut wird. In den beschriebenen Patentanmeldungen wird die Polymerisation durch nicht näher festgelegte organische Peroxide, Redox-Initiatoren, Azoverbindungen oder Persulfate gestartet. Ein etwaiger Einfluß des Initiatorsystems auf die Eigenschaften des Kautschuks wird nicht betrachtet.

In US-A-2,451,180 **der** Goodrich Company wird die Polymerisation zwecks Herstellung von Poly-1,3-butadienen und Copolymeren von 1,3-Butadien mit weiteren copolymerisierbaren Monomeren wie z.B. Acrylnitril unter Verwendung kleiner Mengen von wasserlöslischen Metallsalzen der Gruppe VIII des Mendelejewschen Periodensystems auf Basis von Eisen, Kobalt, Nickel, Palladium, Osmium, Platin etc. beschrieben. Eisen-, Kobalt- und Nickelsalze werden als bevorzugte Salze genannt. Als typische Beispiele solcher Salze werden allgemein Chloride, Nitrate, Iodide, Bromide, Sulfate, Sulfite, Nitrite, Thiocyanate von Eisen, Kobalt, Nickel und anderen Gruppe VIII Metallen aufgezählt, sofern sie wasserlöslich sind. Im Hinblick auf Metalle, die in mehr als einer Oxidationsstufe vorkommen können, wird allgemein ausgeführt, diese könnten sowohl in der oxidierten als auch der reduzierten Form verwendet werden z.B. als Eisen(II)sulfat oder Eisen(III)sulfat. Es wird ausgeführt, dass bei Einsatz dieser Metallsalze, unabhängig davon, ob weitere gängige Initiatoren und Beschleuniger zugegen sind oder nicht, eine erhebliche Erhöhung der Polymerisationsgeschwindigkeit auf wenige Stunden beobachtet wird und ferner bei einer niedrigen Temperatur von 20 bis 30 °C polymerisiert werden könne, was zu Polymeren mit verbesserten Eigenschaften, insbesondere einer verbesserten Bruchdehnung ("Elongation at break") und Bruchfestigkeit ("Tensile Strength") führe. In den Beispielen wird NBR in Gegenwart von Eisenammoniumsulfat, Kobaltchlorid oder Nickelsulfat und unter Einsatz von Wasserstoffperoxid polymerisiert. Untersuchungen zu den Eigenschaften der NBR Vulkanisate finden sich jedoch nicht.

In US-A-2,897,167 der Dow Chemical Company wird die Emulsionspolymerisation von konjugierten Diolefinen mit Methylisopropenylketon oder mit einer Mischung von Methylisopropenylketon und einem weiteren Vinyliden-Monomer (z.B. Acrylnitril) zu Kautschuken oder stabilen Latices beschrieben. Hierbei wird besonders hervorgehoben, dass der Einsatz des Methylisopropenylketon-Monomers erforderlich ist, um die Gelbildung und damit das Anfallen von präkoaguliertem Polymer im hergestellten Latex zu verhindern. Die Polymerisation wird in Gegenwart eines Redoxsystems durchgeführt. Als Reduktionsmittel wird Natriumformaldehydsulfoxylat verwendet, als Oxidationsmittel Diisopropylbenzolhydroperoxid. Daneben wird redoxaktives Eisen in Form von Eisen(III)chlorid oder Eisen(II)sulfat zugesetzt. Ein Einfluß des Eisen-basierten Redoxinitatorsystems auf die Eigenschaften des hergestellten Kautschukes oder Latex wird nicht dargelegt.

In US-A-2,968,645 der Firma Dow Chemical Company wird die Emulsionspolymerisation von Kautschuken in Gegenwart von $\alpha$- oder $\beta$-Conidendrol (Naphtho(2,3-c)furan-1(3H)-on) beschrieben. Dabei wird das $\alpha$- oder $\beta$-Conidendrol der Polymerisation zugesetzt, um einerseits die Geschwindigkeit der Polymerisation zu erhöhen und andererseits dessen Wirkung als Antioxidans nach der Polymerisation zu erhalten. Als Monomere werden die Isomere des Butadiens und/oder monoolefinische Substanzen verwendet. Für das Redoxsystem dieser Emulsionspolymerisation werden gemäß den Beispielen und der Beschreibung Eisen(III)chlorid und Eisen(II)sulfat als Metallsalze zugesetzt. Welchen Einfluß die Komponenten des Redoxsystems gegebenenfalls auf die Eigenschaften des Kautschuks haben, wird nicht untersucht.

Auch aus US-A-2,716,107 ist der Einsatz von Redoxsystemen enthaltend Eisen(III)chlorid oder Eisen(II)sulfat zur Polymerisation von 1,3-Butadien und einem oder mehreren vinylischen Monomeren, wie z.B. Acrylnitril, bekannt.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit, einer hervorragenden Beständigkeit gegen Ozon und Chemikalien, letztere im Fall des HNBR noch ausgeprägter als beim NBR. Sie weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Kommerziell erhältlich sind eine Vielzahl unterschiedlicher Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen mit Gehalten spezieller Termonomere oder besonderen Funktionalisierungen zunehmend nachgefragt. Bedarf besteht weiterhin an Typen, die über eine gute und leichte Verarbeitbarkeit, insbesondere eine sehr gute Fließfähigkeit verfügen und deren Vulkanisate ein gutes mechanisches Eigenschaftsprofil zeigen. Typen mit verbesserter Fließfähigkeit lassen sich beispielsweise bisher durch Anwendung eines zusätzlichen Metathese-Verfahrensschrittes herstellen, wodurch eine deutlich geringere Mooney Viskosität und damit ein geringeres mittleres Molekulargewicht bei den Nitrilkautschuken eingestellt werden kann. Da es sich um einen zusätzlichen Verfahrensschritt handelt, ist dies wirtschaftlich gesehen nicht uneingeschränkt positiv zu sehen und die erhaltenen Nitrilkautschuk-Typen erfüllen bezüglich des Eigenschaftsprofils auch nicht alle Anforderungen.

Die **Aufgabe der vorliegenden Erfindung** bestand somit darin, ein Verfahren bereitzustellen, das die Synthese von Nitrilkautschuken ermöglicht, die eine gute und leichte Verarbeitbarkeit, insbesondere Fließfähigkeit besitzen und deren Vulkanisate ein sehr gutes mechanische Eigenschaftsprofil zeigen. **Gelöst wird diese Aufgabe** durch ein neues Verfahren zur Herstellung von Nitrilkautschuken, bei dem ein spezielles Redox-System als Initiator für die Emulsionspolymerisation eingesetzt wird.

**Gegenstand der Erfindung** ist daher ein Verfahren zur Herstellung von Nitrilkautschuken durch Emulsionspolymerisation mindestens eines $\alpha,\beta$-ungesättigten Nitrils, mindestens eines konjugierten Diens und gegebenenfalls einem oder mehreren weiteren copolymerisierbaren Monomeren, dadurch gekennzeichnet, dass die Emulsionspolymerisation unter Einsatz eines Redox-Systems duchgeführt wird, welches

    (i) als Oxidationsmittel mindestens eine Peroxoverbindung,
    (ii) mindestens ein Reduktionsmittel und
    (iii) Fe-II-Chlorid

enthält.

Das erfindungsgemäße Verfahren kann ferner zur Herstellung hydrierter Nitrilkautschuke genutzt werden, indem nachfolgend eine Hydrierreaktion durchgeführt wird. Dieser Hydrierreaktion kann auch noch eine Metathese-Reaktion zum Molekulargewichtsabbau vorgeschaltet sein.

**Gegenstand der Erfindung** sind ferner optional hydrierte Nitrilkautschuke mit Wiederholungseinheiten abgeleitet von mindestens einem $\alpha,\beta$-ungesättigten Nitril, mindestens einem konjugierten Dien und gegebenenfalls einem oder mehreren weiteren copolymerisierbaren Monomeren, erhältlich durch eine Emulsionspolymerisation mindestens eines ungesättigten Nitrils, mindestens eines konjugierten Diens und gegebenenfalls einem oder mehreren weiteren copolymerisierbaren Monomeren unter Einsatz eines Redox-Systems enthaltend

    (i) als Oxidationsmittel mindestens eine Peroxoverbindung,
    (ii) mindestens ein Reduktionsmittel und
    (iii) Fe-II-Chlorid

und eine im Fall der hydrierten Nitrilkautschuke sich anschließende Hydrierung.

Überraschenderweise ist es möglich, durch das erfindungsgemäße Verfahren auf verfahrenstechnisch einfachem Weg die speziellen neuen Nitrilkautschuke und ganz oder teilweise hydrierte neue Nitrilkautschuke bereitzustellen. Diese neuen Kautschuke zeichnen sich gegenüber den bekannten Nitrilkautschuken unerwarteterweise durch eine sehr geringe Langkettenverzweigung und einen sehr geringen Gelgehalt aus. Sie verfügen daher über eine hohe Fließfähigkeit und lassen sich demzufolge sehr einfach verarbeiten. Die optional hydrierten Nitrilkautschuke weisen ferner gegenüber Nitrilkautschuken, die unter Einsatz anderer Redoxsysteme erhalten werden, eine deutlich einheitlichere Verteilung der verschiedenen Monomere entlang der Polymerketten auf. Dieser unerwartete Effekt kann, wie nachfolgend geschildert, über die Breite der Glastemperaturübergangs (hergeleitet über die Gordon Taylor Beziehung) bestimmt werden. Auf diesem Weg wird erstmals das prinzipielle Problem gelöst, dass die zur Herstellung von Nitrilkautschuken eingesetzten konjugierten Diene, insbesondere 1,3-Butadien, und $\alpha,\beta$-ungesättigten Nitrile, insbesondere Acrylnitril, eine sehr unterschiedliche Reaktivität besitzen und bisher nur durch ein entsprechendes Dosierungsregime im Laufe der Polymerisation sichergestellt werden konnte, dass die hergestellte Produktmenge Polymermoleküle mit einer ausreichenden chemischen Einheitlichkeit, sprich einer einheitlichen Verteilung der verschiedenen Monomere entlang der Polymerketten enthält.

Darüberhinaus verfügen Vulkanisate, die aus den optional hydrierten Nitrilkautschuken hergestellt werden, über ein unverändert sehr gutes Eigenschaftsprofil.

In den vorgenannten Publikationen des Standes der Technik findet sich keinerlei Offenbarung oder Hinweis, ob und gegebenfalls in welcher Form bei einer radikalischen Emulsionspolymerisation durch Wahl oder Zusammensetzung spezieller Redoxinitiatorsysteme Einfluß auf die Eigenschaften der Nitrilkautschuke genommen werden kann. Insbesondere der Einfluß des Chlorids gegenüber dem Sulfat als Anion war völlig überraschend, da in der Literatur bei den experimentellen Beispielen immer wieder ausschließlich Eisen(II)sulfate eingesetzt wurden (siehe US-A-2,897,167 **und** US-A-2,716,107).

**Nitrilkautschuk:**

Die erfindungsgemäßen Nitrilkautschuke weisen Wiederholungseinheiten mindestens eines $\alpha,\beta$ungesättigten Nitrils, mindestens eines konjugierten Diens und gegebenenfalls eines oder mehrerer weiterer copolymerisierbarer Monomere auf.

Das konjugierte Dien kann von jeder Natur sein. Bevorzugt werden ($C_4$-$C_6$)-konjugierte Diene eingesetzt. Besonders bevorzugt sind 1,3-Butadien, Isopren, 2,3-Dimethylbutadien, 1,2-Butadien, Piperylen, 1,3-Pentadien oder Mischungen daraus. Insbesondere bevorzugt sind 1,3-Butadien und Isopren oder Gemische daraus. Ganz besonders bevorzugt ist 1,3-Butadien.

Als $\alpha,\beta$-ungesättigtes Nitril kann jedes bekannte $\alpha,\beta$-ungesättigte Nitril eingesetzt werden, bevorzugt sind ($C_3$-$C_5$)-$\alpha,\beta$-ungesättigte Nitrile wie Acrylnitril, Methacrylnitril, 1-Chloracrylnitril, Ethacrylnitril, 2-Cyanoacrylate oder Mischungen davon. Besonders bevorzugt ist Acrylnitril.

Ein besonders bevorzugter Nitrilkautschuk ist ein Copolymer aus Acrylnitril und 1,3-Butadien.

Der erfindungsgemäße optional hydrierte Nitrilkautschuk kann neben den von mindestens einem konjugierten Dien und mindestens einem $\alpha,\beta$-ungesättigten Nitril abgeleiteteten Wiederholungseinheiten auch noch Wiederholungseinheiten enthalten, die sich von einem oder mehreren weiteren copolymerisierbaren Monomeren ableiten.

Infrage kommen hierfür beispielsweise carboxylgruppenhaltige, copolymerisierbare Termonomere, bevorzugt $\alpha,\beta$-ungesättigte Monocarbonsäuren, deren Ester oder Amide, $\alpha,\beta$-ungesättigte Dicarbonsäuren, deren Mono- oder -Diester sowie die entsprechenden Anhydride oder Amide.

Als $\alpha,\beta$**-ungesättigte Monocarbonsäuren** können bevorzugt Acrylsäure und Methacrylsäure eingesetzt werden.

Einsetzbar sind auch Ester der $\alpha,\beta$**-ungesättigten Monocarbonsäuren**, bevorzugt deren Alkylester und Alkoxyalkylester. Bevorzugt sind die Alkylester, insbesondere $C_1$-$C_{18}$ Alkylester der $\alpha,\beta$ungesättigten Monocarbonsäuren. Besonders bevorzugt sind Alkylester, insbesondere $C_1$-$C_{18}$ Alkylester der Acrylsäure und der Methacrylsäure, insbesondere Methyl(meth)acrylat, Ethyl(meth)acrylat, Propyl(meth)acrylat, n-Butyl(meth)acrylat, t-Butyl(meth)acrylat, Hexyl (meth)acrylat, 2-Ethylhexyl(meth)acrylat, Octyl(meth)acrylat, n-Dodecyl(meth)acrylat und Lauryl(meth)acrylat. Insbesondere wird n-Butylacrylat eingesetzt. Bevorzugt sind auch Alkoxyalkylester der $\alpha,\beta$-ungesättigten Monocarbonsäuren, besonders bevorzugt Alkoxyalkylester der Acrylsäure oder der Methacrylsäure, insbesondere $C_2$-$C_{12}$-Alkoxyalkylester der Acrylsäure oder der Methacrylsäure, ganz besonders bevorzugt Methoxymethyl(meth)acrylat, Ethoxyethyl(meth) acrylat und Methoxyethyl(meth)acrylat. Insbesondere wird Methoxyethylacrylat eingesetzt. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylate and Cyanoalkylmethacrylate, in denen die C-Atom-Zahl der Cyanoalkylgruppe 2-12 beträgt, vorzugsweise $\alpha$-Cyanoethylacrylat, $\beta$-Cyanoethylacrylat und Cyanobutylmethacrylat. Einsetzbar sind auch Hydroxyalkylacrylate and Hydroxyalkylmethacrylat, in denen die C-Atom-Zahl der Hydroxyalkylgruppen 1-12 beträgt, vorzugsweise Hydroxyethyl(meth)acrylat, Hydroxypropyl(meth)acrylat und Hydroxybutyl-(meth)acrylat. Einseztbar sind auch Fluorsubstituierte Benzylgruppenhaltige Acrylate oder Methacrylate, vorzugsweise Fluorbenzyl(meth)acrylat. Einsetzbar sind auch Fluoroalkylgruppenhaltige (Meth)Acrylate, vorzugsweise Trifluoroethylacrylat und Tetrafluoropropylmethacrylat. Einsetzbar sind auch Aminogruppenhaltige $\alpha\beta$-ungesättigte Carbonsäureester wie Dimethylaminomethylacrylat und Diethylaminoethylacrylat.

Als sonstige Ester der $\alpha,\beta$-ungesättigten Monocarbonsäuren werden ferner beispielsweise Polyethylenglykol(meth)acrylat, Polypropylenglykol(meth)acrylat, Glycidyl(meth)acrylat, Epoxy(meth)acrylat, N-(2-Hydroxyethyl)acrylamide, N-(2-Hydroxymethyl)acrylamide und Urethan(meth)acrylat eingesetzt.

Als weitere copolymerisierbare Monomere können ferner $\alpha,\beta$**-ungesättigte Dicarbonsäuren**, bevorzugt Maleinsäure, Fumarsäure, Crotonsäure, Itaconsäure, Citraconsäure und Mesaconsäure, eingesetzt werden.

Eingesetzt werden können ferner $\alpha,\beta$**-ungesättigte Dicarbonsäureanhydride**, bevorzugt Maleinsäureanhydrid, Itaconsäureanhydrid, Citraconsäureanhydrid und Mesaconsäureanhydrid.

Eingesetzt werden können ferner **Mono- oder Diester von** $\alpha,\beta$**-ungesättigten Dicarbonsäuren**. Hierbei handelt es sich z.B. um Alkyl-, bevorzugt $C_1$-$C_{10}$-Alkyl, insbesondere Ethyl-, n-Propyl-, isoPropyl, n-Butyl-, tert.-Butyl, n-Pentyl- oder n-Hexyl-, Alkoxyalkyl-, bevorzugt $C_2$-$C_{12}$ Alkoxyalkyl-, besonders bevorzugt $C_3$-$C_8$-Alkoxyalkyl, Hydroxyalkyl-, bevorzugt $C_1$-$C_{12}$ Hydroxyalkyl-, besonders bevorzugt $C_2$-$C_8$- Hydroxyalkyl, Cycloalkyl-, bevorzugt $C_5$-$C_{12}$-Cycloalkyl-, besonders bevorzugt $C_6$-$C_{12}$-Cycloalkyl, Alkylcycloalkyl-, bevorzugt $C_6$-$C_{12}$-Alkylcycloalkyl-, besonders bevorzugt $C_7$-$C_{10}$-Alkylcycloalkyl, Aryl-, bevorzugt $C_6$-$C_{14}$-Aryl-Mono- oder -Diester, wobei es sich im Fall der Diester jeweils auch um gemischte Ester handeln kann.

Beispiele von $\alpha,\beta$**-ungesättigten Dicarbonsäuremonoestern** umfassen

- Maleinsäuremonoalkylester, bevorzugt Monomethylmaleat, Monoethylmaleat, Monopropylmaleat und Mono-n-butylmaleat;
- Maleinsäuremonocycloalkylester, bevorzugt Monocyclopentylmaleat, Monocyclohexylmaleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloallcylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexylcitraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropylitaconat und Mono-n-butyl itaconat;
- Itaconsäuremonocycloalkylester, bevorzugt Monocyclopentylitaconat, Monocyclohexylitaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Als $\alpha,\beta$**-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

**Weitere mögliche Monomere** sind Vinylaromaten wie Styrol, $\alpha$-Methylstyrol und Vinylpyridin, sowie nicht konjugierte Diene, wie 4-Cyanocyclohexen (4-CCN) und 4-Vinylcyclohexen (VCH), und Alkine, insbesondere 1- oder 2-Butin.

Die Anteile an konjugiertem Dien und $\alpha,\beta$-ungesättigtem Nitril in den erfindungsgemäßen optional hydrierten Nitrilkautschuken können in weiten Bereichen variieren. Der Anteil des oder der Summe der konjugierten Diene liegt üblicherweise im Bereich von 20 bis 95 Gew.%, bevorzugt im Bereich von 40 bis 90 Gew.-%, besonders bevorzugt im Bereich von 50 bis 85 Gew. %, bezogen auf das Gesamtpolymer. Der Anteil des oder der Summe der α,β-ungesättigten Nitrile liegt üblicherweise bei 5 bis 80 Gew.%, bevorzugt bei 10 bis 60 Gew.-%, besonders bevorzugt bei 15 bis 50 Gew.-%, bezogen auf das Gesamtpolymer. Die Anteile der Monomere summieren sich jeweils zu 100 Gew.-% auf.

Die zusätzlichen Monomere können in Mengen von 0 bis 40 Gew.%, bevorzugt 0,1 bis 40 Gew. -%, besonders bevorzugt 1 bis 30 Gew.-%, bezogen auf das Gesamtpolymer, vorliegen. In diesem Fall werden entsprechende Anteile des oder der konjugierten Diene und/oder des oder der α,βungesättigten Nitrile durch die Anteile dieser zusätzlichen Monomere ersetzt, wobei sich die Anteile aller Monomere weiterhin jeweils zu 100 Gew.-% aufsummieren. Im Fall der Anwesenheit von einem oder mehreren Termonomeren hat es sich bewährt, dass der Anteil des oder der Summe der konjugierten Diene im Bereich von 40 bis 90 Gew.-% liegt, bevorzugt im Bereich von 50 bis 85 Gew. %, bezogen auf das Gesamtpolymer, der Anteil des oder der Summe der α,β-ungesättigten Nitrile bei 9,9 bis 59,9 Gew.-%, bevorzugt bei 14 bis 50 Gew.-%, bezogen auf das Gesamtpolymer, liegt und der Anteile des oder der Summe der Termonomere im Bereich von 0,1 bis 30 Gew.-%, bevorzugt 1 bis 20 Gew.-%, bezogen auf das Gesamtpolymer liegt, wobei sich die Anteile aller Monomere jeweils zu 100 Gew.% aufsummieren müssen.

Werden als zusätzliche Termonomere Ester der (Meth)acrylsäure eingesetzt, so erfolgt dies üblicherweise in Mengen von 1 bis 25 Gew. % bezogen auf das Gesamtpolymer

Werden als zusätzliche Termonomere α,β-ungesättigte Mono- oder Dicarbonsäuren eingesetzt, so erfolgt dies üblicherweise in Mengen von weniger als 10 Gew. % bezogen auf das Gesamtpolymer.

Der Stickstoffgehalt zur Bestimmung des Acrylnitrilgehalts wird in den erfindungsgemäßen Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C ≥ 85 Gew. % löslich.

Bevorzugt sind erfindungsgemäße Nitrilkautschuke, die Wiederholungseinheiten von Acrylnitril, 1,3-Butadien und gegebenenfalls von einem oder mehreren weiteren copolymerisierbaren Monomeren aufweisen. Ebenso bevorzugt sind Nitrilkautschuke, die Wiederholungseinheiten von Acrylnitril, 1,3-Butadien und einer oder mehreren α,β-ungesättigten Mono- oder Dicarbonsäuren, deren Estern oder Amiden aufweisen, insbesondere Wiederholungseinheiten eines Alkylesters einer α,β-ungesättigten Carbonsäure, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl (meth)acrylat oder Lauryl(meth)acrylat.

Die erfindungsgemäßen Nitrilkautschuke, die auch ganz oder teilweise hydriert sein können, weisen **Mooney Viskositäten** (ML (1+4 @100°C)) von 10 bis 160, bevorzugt von 15 bis 150 Mooney-Einheiten, besonders bevorzugt von 20 bis 150 Mooney-Einheiten und insbesondere 25 bis 145 Mooney-Einheiten auf. Die Bestimmung der Werte für die Mooney-Viskosität (ML 1+4 at 100°C) erfolgt jeweils mittels eines Scherscheibenviskosimeters nach DIN 53523/3 bzw. ASTM D 1646 bei 100°C.

Die eingesetzten Nitrilkautschuke besitzen ferner eine **Polydispersität** $PDI = M_w/M_n$, wobei $M_w$ das Gewichtsmittel und $M_n$ das Zahlenmittel des Molekulargewichts darstellt, im Bereich von 2,0 - 6,0 und bevorzugt im Bereich von 2,0 - 5,0.

Die **Glastemperaturen** der erfindungsgemäßen Nitrilkautschuke, die auch ganz oder teilweise hydriert sein können, liegen im Bereich von -70°C bis +10°C, vorzugsweise im Bereich von -60°C bis 0°. Die Bestimmung der Glasübergangstemperatur, sowie deren sogenannte Onset- und Offsetpunkte erfolgt mittels dynamischer Differenzkalorimetrie (engl.: *Differential Scanning Calorimetry* - DSC) nach ASTM E 1356-03 bzw. nach DIN 11357-2.

Anhand der gemessenen Onset- und Offsetpunkte kann nach der Gordon-Taylor Beziehung

$$T_g = 1,4564 * [ACN] - 77,147$$

jeweils für den Onset- bzw. Offsetpunkt ein ACN-Gehalt ([ACN]) berechnet werden, und aus diesen ein Differenzwert (ΔACN) der ACN-Verteilung gebildet werden:

$$\Delta ACN = ACN \,(Offset) - ACN \,(Onset)$$

Dieser Differenzwert ΔACN stellt ein Maß der Einheitlichkeit dar.

Der **Vulkanisationsverlauf** am MDR und dessen analytischen Daten werden an einem Monsanto-Rheometer MDR 2000 nach ASTM D5289-95 gemessen.

Die Bestimmung des **MSR (Mooney Stress Relaxation)** erfolgt jeweils mittels eines Scherscheibenviskosimeters nach ISO 289-4:2003(E) bei 100°C.

**Herstellung der erfindungsgemäßen Nitrilkautschuke**:

Die Herstellung der Nitrilkautschuke erfolgt durch Emulsionspolymerisation. Von essentieller Bedeutung ist das eingesetzte Redox-System. Dieses enthält zur Initiierung der Emulsionspolymerisation ein Oxidationsmittel (i), welches in Radikale zerfällt.

Als **Oxidationsmittel (i)** werden Peroxoverbindungen, also Verbindungen, die eine -O-O-Einheit aufweisen, eingesetzt. Zu den Peroxoverbindungen gehören Wasserstoffperoxid, Peroxodisulfate, Peroxodiphosphate, Hydroperoxide, Persäuren, Persäureester, Persäureanhydride und Peroxide mit zwei organischen Resten. Als Salze der Peroxodischwefelsäure und der Peroxodiphosphorsäure können Natrium-, Kalium- und Ammoniumsalze eingesetzt werden. Geeignete Hydroperoxide sind z.B. t-Butylhydroperoxid, Cumolhydroperoxid und p-Menthanhydroperoxid. Geeignete Peroxide mit zwei organischen Resten sind Dibenzoylperoxid, 2,4,-Dichlorbenzoylperoxid, Di-t-butylperoxid, Dicumylperoxid, t-Butylperbenzoat und t-Butylperacetat.

Bevorzugt wird p-Menthanhydroperoxid oder Pinanhydroperoxid eingesetzt.

Als **Reduktionsmittel (ii)** können z.B. Natriumformaldehydsulfoxylat, Natriumbenzaldehydsulfoxylat, reduzierende Zucker, Ascorbinsäure, Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin eingesetzt werden, bevorzugt ist Natriumformaldehyd-sulfoxylat.

Die Menge an Oxidationsmittel (i) beträgt üblicherweise 0,001 bis 1 Gew.-Teile bezogen auf 100 Gew.-Teile Monomere. Die molare Menge an Reduktionsmittel (ii) liegt im Bereich von 1 bis 1000 mol% bezogen auf die molare Menge des eingesetzten Oxidationsmittels (i). Bevorzugt liegt die molare Menge an Reduktionsmittel (ii) im Bereich von 2 bis 100% bezogen auf die molare Menge des eingesetzten Oxidationsmittels (i).

Bei dem eingesetzten **Eisen-II-Chlorid** handelt es sich bevorzugt um $FeCl_2 \cdot 4\,H_2O$.

Weitere mögliche Zusatzstoffe, die im erfindungsgemäßen Verfahren zugesetzt werden können, sind Komplexbildner und Salze, wie z.B. Trinatriumphosphat. Als Komplexbildner kommen z.B. Natriumethylendiamintetraacetat (EDTA), Natriumsilicat, Natriumpyrophosphat oder Natriumpolyphosphat in Betracht, von denen EDTA bevorzugt ist. Die molare Menge an Komplexbildner bezieht sich dabei auf die Menge an eingesetztem Eisen(II)chlorid, und wird mit diesem üblicherweise mindestens äquimolar gewählt.

In einer bevorzugten Ausführungsform wird das erfindungsgemäße Verfahren unter Einsatz eines Redox-Systems durchgeführt, das als Peroxid p-Menthanhydroperoxid oder Pinanhydroperoxid, als Reduktionsmittel Natriumformaldehydsulfoxylat sowie Fe-II-Chlorid ($FeCl_2 \cdot 4\,H_2O$) enthält. In einer besonders bevorzugten Ausführungsform wird das erfindungsgemäße Verfahren unter Einsatz dieses speziellen Redox-Systems durchgeführt und in zusätzlicher Gegenwart von NatriumEthylendiamintetraacetat.

Zur Durchführung der Polymerisation werden einzelne, mehrere oder alle Komponenten des Redoxsystems zu Beginn der Polymerisation oder während der Polymerisation zudosiert. Erfolgt die Zudosierung zu Beginn der Polymerisation so werden die Komponenten des Redoxsystems entweder gemeinsam oder einzeln in die vorgelegte Reaktionsmischung enthaltend Wasser, die Monomere sowie den Emulgator zudosiert. Es hat sich bewährt, das Reduktionsmittel und das Fe-II-Chlorid in Form einer Prämix-Lösung zuzusetzen, während das Oxidationsmittel separat zugesetzt wird.

Als Emulgatoren können wasserlösliche Salze anionischer Emulgatoren oder auch neutrale Emulgatoren eingesetzt werden. Bevorzugt werden anionische Emulgatoren eingesetzt.

Als anionische Emulgatoren können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Lävopimarsäure enthalten. Eine besonders bevorzugte modifizierte Harzsäure ist die disproportionierte Harzsäure (Ullmann's Encyclopedia of Industrial Chemistry, 6. Auflage, Band 31, S. 345-355).

Als anionische Emulgatoren können auch Fettsäuren eingesetzt werden. Diese enthalten 6 bis 22 C-Atome pro Molekül. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure und Linolensäure. Die Carbonsäuren basieren üblicherweise auf herkunftsspezifischen Ölen oder Fetten wie z. B. Castoroil, Baumwollsaat, Erdnussöl, Leinsamenöl, Kokosnussfett, Palmkernöl, Olivenöl, Rapsöl, Sojabohnenöl, Fischöl und Rindertalg etc. (Ullmann's Encyclopedia of Industrial Chemistry, 6. Auflage, Band 13, S. 75-108). Bevorzugte Carbonsäuren leiten sich von der Kokosfettsäure und von Rindertalg ab und sind teil- bzw. vollhydriert.

Derartige Carbonsäuren auf Basis modifizierter Harzsäuren bzw. Fettsäuren werden als wasserlösliche Lithium, Natrium, Kalium und Ammoniumsalze verwendet. Na- und K-Salze sind bevorzugt.

Anionische Emulgatoren sind ferner Sulfonate, Sulfate und Phosphate, die an einen organischen Rest gebunden sind. Als organischer Rest kommen aliphatische, aromatische, alkylierte Aromaten, kondensierte Aromaten, sowie methylenverbrückte Aromaten in Frage, wobei die methylenverbrückten und kondensierten Aromaten zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Auch die Sulfate, Sulfonate und Phosphate werden als Lithium-, Natrium-, Kalium- oder Ammoniumsalze eingesetzt. Die Natrium-, Kalium- und Ammoniumsalze sind bevorzugt.

Beispiele für derartige Sulfonate, Sulfate und Phosphate sind Na-Laurylsulfat, Na-Alkylsulfonat, Na-Alkylarylsulfonat, Na-Salze methylenverbrückter Arylsulfonate, Na-Salze alkylierter Naphthalinsulfonate sowie die Na-Salze methylenverbrückter Napthalinsulfonate, die auch oligomerisiert sein können, wobei der Oligimerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis 3 Sulfonsäuregruppen) im Molekül enthalten können. Besonders bevorzugt sind Na-Laursylsulfat, Na-Alkylsulfonatgemische mit 12 bis 18 C-Atomen, Na-Alkylarylsulfonate, Na-Diisobutylennaphthalinsulfonat, methylenverbückte Polynaphthalinsulfonatgemische sowie methylenverbrückte Arylsulfonatgemische.

Neutrale Emulgatoren leiten sich von Additionsprodukten des Ethylenoxids und des Propylenoxids an Verbindungen mit hinreichend acidem Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblicherweise nicht alleine, sondern in Kombination mit anionischen Emulgatoren eingesetzt.

Bevorzugt sind die Na- und K-Salze von disproportionierter Abietinsäure und von teilhydrierter Talgfettsäure, sowie Mischungen derselben, Natriumlaurylsulfat, Na-Alkylsulfonate, Natrium-Alkylbenzolsulfonat sowie alkylierte und methylenverbrückte Naphthalinsulfonsäuren.

Die Emulgatoren werden in einer Menge von 0,2 bis 15 Gew.-Teilen, bevorzugt 0,5 bis 12,5 Gew.-Teilen, besonders bevorzugt 1,0 bis 10 Gew.-Teilen bezogen auf 100 Gew.-Teile der Monomermischung eingesetzt.

Falls nach Abschluss der Polymerisation Latices erhalten werden, die aufgrund einer gewissen Instabilität zur vorzeitigen Selbstkoagulation neigen, können die genannten Emulgatoren auch zur Nachstabilisierung der Latices verwendet werden. Dies kann insbesondere vor der Entfernung nicht umgesetzter Monomerer durch Behandlung mit Wasserdampf sowie vor einer Latexlagerung sinnvoll sein.

Die Emulsionspolymerisation kann in Gegenwart von Molekulargewichtsreglern durchgeführt werden. Hierfür finden z.B. $C_{12}$-Mercaptane (z.B. in Form tertiärer Dodecylmercaptane, in der Literatur auch als "TDDM" bezeichnet) entweder einzeln oder als Gemisch oder $C_{16}$-Mercaptane entweder einzeln oder als Gemisch Anwendung. Derartige Molekulargewichtsregler sind käuflich erhältlich z.B. von Phillips. Bewährt hat sich der Einsatz eines Gemisches von $C_{12}$-Mercaptanen aus 2,2,4,6,6-Pentamethylheptanthiol-4, 2,4,4,6,6-Pentamethylheptanthiol-2, 2,3,4,6,6-Pentamethylheptanthiol-2 und 2,3,4,6,6-Pentamethylheptanthiol-3. Es kann in Mengen von 0,05 bis 3 Gew.-Teilen, vorzugsweise von 0,1 bis 1,5 Gew.-Teilen bezogen auf 100 Gew.-Teile der Monomermischung eingesetzt werden. Die Dosierung solcher Mercaptan-Verbindungen oder -Gemische erfolgt entweder zu Beginn der Polymerisation oder portionsweise während der Polymerisation, wobei die portionsweise Zugabe sämtlicher sowie einzelner Komponenten der Reglermischung während der Polymerisation bevorzugt ist. Wird die og. spezielle Mischung eingesetzt, so weist der Nitrilkautschuk 2,2,4,6,6-Pentamethylheptan-4-thio-, 2, 4, 4, 6, 6-Pentamethylheptan-2-thio-, 2, 3 , 4, 6, 6-Pentamethylheptan-2-thio und/oder 2,3,4,6,6-Pentamethylheptan-3-thio-Endgruppen auf.

Die Polymerisationszeit liegt im Bereich von 4 h bis 15 h und hängt im Wesentlichen vom Acrylnitrilgehalt der Monomermischung und der Polymerisationstemperatur ab. Die Polymerisationstemperatur liegt im Bereich von 0 bis 30°C, bevorzugt im Bereich von 5 bis 25°C. Bei Erreichung von Umsätzen im Bereich von 50 bis 95%, vorzugsweise im Bereich von 70 bis 90% wird die Polymerisation üblicherweise abgestoppt. Hierfür wird dem Reaktionsgemisch ein Stopper zugesetzt. Geeignet sind beispielsweise Dimethyldithiocarbamat, Na-Nitrit, Mischungen von Dimethyldithiocarbamat und Na-Nitrit, Hydrazin und Hydroxylamin sowie hiervon abgeleitete Salze wie Hydraziniumsulfat und Hydroxylammoniumsulfat, Diethylhydroxylamin, Diisopropylhydroxylamin, wasserlösliche Salze des Hydrochinon, Natriumdithionit, Phenyl-$\alpha$-Naphthylamin und aromatische Phenole wie tert-Butylbrenzkatechol, oder Phenothiazin.

Die bei der Emulsionspolymerisation verwendete Wassermenge liegt im Bereich von 100 bis 900 Gew.-Teilen, bevorzugt im Bereich von 120 bis 500 Gew.-Teilen, besonders bevorzugt im Bereich von 150 bis 400 Gew.-Teilen Wasser bezogen auf 100 Gew.-Teile der Monomermischung.

Bei der Emulsionspolymerisation können der wässrigen Phase auch Säuren oder Basen zur pH-Wert Einstellung sowie auch zur pH-Wert Pufferung zugesetzt werden und um die Viskosität während der Polymerisation zu verringern. Hierfür werden üblicherweise Salze einwertiger Metalle in Form von KOH, NaOH, Natriumsulfat, Natriumcarbonat, Natriumhydrogencarbonat, LiCl, N aCl und KCl eingesetzt. Bevorzugt sind Natrium- und Kaliumhydroxid, Natriumhydrogencarbonat, Lithium-, Natrium- und Kaliumchlorid. Die Mengen dieser Elektrolyte liegen im Bereich 0 bis 1 Gew.-Teile, vorzugsweise 0 bis 0,5 Gew.-Teile bezogen auf 100 Gew.-Teile der Monomermischung.

Die Polymerisation kann entweder diskontinuierlich oder auch kontinuierlich in einer Rührkesselkaskade durchgeführt werden.

Will man chemisch ganz besonders einheitliche Produkte herstellen, werden Acrylnitril bzw. Butadien nachdosiert, wenn die Zusammensetzung außerhalb des azeotropen Butadien/Acrylnitril-Verhältnisses liegt. Vorzugsweise ist eine Nachdosierung bei NBR-Typen mit Acrylnitrilgehalten von 10 bis 34 sowie bei den Typen mit 40 bis 50 Gew.%

Acrylnitril (W. Hofmann, Rubber Chem. Technol. 36 (1963) 1) der Fall. Die Nachdosierung erfolgt - wie z.B. in der DD 154 702 angegeben - vorzugsweise computergesteuert auf der Basis eines Rechnerprogramms. Diese Nachdosierung ist aber nicht nötig, da wie bereits beschrieben, der Vorteil des erfindungsgemäßen Verfahren darin besteht, durch das spezielle Redoxsystem bereits Polymere mit hoher chemischer Einheitlichkeit zu liefern.

Zur Entfernung nicht umgesetzter Monomere sowie flüchtiger Bestandteile wird der abgestoppte Latex einer Wasserdampfdestillation unterzogen. Hierbei werden Temperaturen im Bereich von 70°C bis 150°C angewandt, wobei bei Temperaturen <100°C der Druck reduziert wird. Vor der Entfernung der flüchtigen Bestandteile kann eine Nachstabilisierung des Latex mit Emulgator erfolgen. Hierfür verwendet man zweckmäßigerweise die zuvor genannten Emulgatoren in Mengen von 0,1 bis 2,5 Gew. %, vorzugsweise 0,5 bis 2,0 ,Gew. % bezogen auf 100 Gew.-Teile Nitrilkautschuk.

Vor oder bei der Latexkoagulation können dem Latex ein oder mehrere Alterungsschutzmittel zugesetzt werden. Hiefür eigenen sich phenolische, aminische und auch sonstige Alterungsschutzmittel.

Geeignete phenolische Alterungsschutzmittel sind alkylierte Phenole, styrolisiertes Phenol, sterisch gehinderte Phenole wie 2,6-Di-tert.-Butylphenol, 2,6-Di-tert-Butyl-p-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-tert-Butylphenol) (BPH) sowie sterisch gehinderte Thiobisphenole.

Falls eine Verfärbung des Kautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-$\alpha$-Naphthylamin (PAN), Phenyl-$\beta$-Naphthylamin (PBN), vorzugsweise solche auf Phenylendiaminbasis eingesetzt. Beispiele für Phenylendiamine sind *N*-Isopropyl-*N'*-phenyl-p-Phenylendiamin, *N*-1,3-Dimethylbutyl-*N'*-Phenyl-p-Phenylendiamin (6PPD), *N*-1,4-Dimethylpentyl-*N'*-phenyl-p-Phenylendiamin (7PPD), *N,N'*-bis-1,4-(1,4-Dimethylpentyl)-p-Phenylendiamin (77PD) etc.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Alterungsschutzmitteln eingesetzt. TMQ, MBI und MMBI werden vor allem für NBR-Typen verwendet, die peroxidisch vulkanisiert werden.

Für die Koagulation wird der Latex auf einen für den Fachmann bekannten pH-Wert und zwar durch Zusatz einer Base, bevorzugt Ammoniak oder Natrium- oder Kaliumhydroxid, oder einer Säure, bevorzugt Schwefelsäure oder Essigsäure, eingestellt.

In einer Ausführungsform des Verfahrens wird die Koagulation unter Einsatz mindestens eines Salzes ausgewählt aus der Gruppe bestehend aus Aluminium-, Calcium-, Magnesium-, Natrium-, Kalium- und Lithium-Salzen durchgeführt. Als Anionen dieser Salze werden üblicherweise ein- oder zweiwertige Anionen eingesetzt. Bevorzugt sind Halogenide, besonders bevorzugt Chlorid, Nitrat, Sulfat, Hydrogencarbonat, Carbonat, Formiat und Acetat.

Geeignet sind beispielsweise Natriumchlorid, Kaliumchlorid, Calciumchlorid, Magnesiumchlorid, Natriumnitrat, Kaliumnitrat, Natriumsulfat, Kaliumsulfat, Natriumhydrogencarbonat, Kaliumhydrogencarbonat, Natriumcarbonat, Kaliumcarbonat, Aluminiumsulfat, Kaliumaluminiumsulfat (Kaliumalaun), Natriumaluminiumsulfat (Natriumalaun), Natriumacetat, Calciumacetat und Calciumformiat.

Sofern für die Latex Koagulation ein wasserlösliches Calcium-Salz verwendet wird, ist Calciumchlorid bevorzugt.

Die Konzentration der Lösung eines oder mehrerer Salze ausgewählt aus der Gruppe bestehend aus Aluminium-, Calcium-, Magnesium-, Natrium-, Kalium- und Lithium-Salzen beträgt 3 bis 30 Gew. %. Für die Herstellung der Salzlösung wird vorzugsweise Wasser verwendet, welches Ca-Ionen enthält.

Die für die Latexkoagulation notwendige Gesamtmenge an Salzen ausgewählt aus der Gruppe bestehend aus Aluminium-, Calcium-, Magnesium-, Natrium-, Kalium- und Lithium-Salzen beträgt 0,5 - 200 Gew. %, vorzugsweise 0,8 - 80 Gew. %, besonders bevorzugt 1-50 Gew. % Salz, bezogen auf 100 Gew. Teile Nitrilkautschuk.

Neben mindestens einem Salz ausgewählt aus der oben definierten Gruppe können bei der Koagulation auch Fällhilfsmittel eingesetzt werden. Als Fällhilfsmittel kommen beispielsweise wasserlöslichen Polymere in Frage. Diese sind nichtionisch, anionisch oder kationisch.

Beispiele für nichtionische polymere Fällhilfsmittel sind modifizierte Cellulose wie Hydroxyalkylcellulose oder Methylcellulose sowie Addukte von Ethylenoxid und Propylenoxid an Verbindungen mit acidem Wasserstoff. Beispiele für Verbindungen mit acidem Wasserstoff sind: Fettsäure, Zucker wie Sorbit, Mono- und Difettsäureglyceride, Phenol, alkylierte Phenole, (Alkyl)phenol/Formaldehyd-Kondensate etc. Die Additionsprodukte von Ethylenoxid und Propylenoxid an diese Verbindungen können statistisch und blockartig aufgebaut sein. Von diesen Produkten sind solche bevorzugt, bei denen die Löslichkeit mit zunehmender Temperatur abnimmt. Charakteristische Trübungstemperaturen liegen im Bereich 0 bis 100°C, insbesondere im Bereich von 20 bis 70°C.

Beispiele für anionische polymere Fällhilfsmittel sind die Homo- und Copolymeren von (Meth)acrylsäure, Maleinsäure, Maleinsäureanydrid etc. Bevorzugt ist das Na-Salz der Polyacrylsäure.

Kationische polymere Fällhilfsmittel basieren üblicherweise auf Polyaminen sowie auf Homo- und Copolymeren des (Meth)acrylamids. Bevorzugt sind Polymethacxrylamide und Polyamine, insbesondere auf Basis Epichlorhydrin und Dimethylamin. Die Mengen an polymeren Fällhilfsmitteln betragen 0,01 bis 5 Gew.-Teilen, bevorzugt 0,05 bis 2,5 Gew.-Teile auf 100 Gew.-Teile Nitrilkautschuk.

Auch der Einsatz anderer Fällhilfsmittel ist denkbar. Es ist aber anzumerken, dass es ohne Probleme möglich ist, das erfindungsgemäße Verfahren mit dem gewünschten Erfolg in Abwesenheit von zusätzlichen Fällhilfsmitteln und dabei insbesondere in Abwesenheit von $C_1$-$C_4$-Alkylcellulosen, Hydroxyalkylcellulosen, auf Pflanzen zurückgehenden proteinartigen Materialien oder Polysacchariden, wie z.B. Stärke, oder wasserlöslichen Polyaminverbindungen durchzuführen.

Der zur Koagulation eingesetzte Latex besitzt zweckmäßigerweise eine Feststoffkonzentration im Bereich von 1 % bis 40 %, vorzugsweise im Bereich von 5 % bis 35 % und besonders bevorzugt im Bereich von 15 bis 30 Gew. %.

Die Latexkoagulation wird im Temperaturbereich von 10 bis 100°C durchgeführt, vorzugsweise bei einer Temperatur von 20 bis 90°C. Die Latexkoagulation kann kontinuierlich oder diskontinuierlich erfolgen, bevorzugt wird kontinuierlich gearbeitet.

In einer alternativen Ausführungsform kann der in üblicher Weise von nicht umgesetzten Monomeren abgetrennte Latex auch mit Säuren in einem pH-Bereich von $\leq 6$ behandelt werden, wodurch das Polymer ausfällt. Bevorzugt wird die Behandlung bei einem pH-Wert $\leq 4$, besonders bevorzugt 2 durchgeführt.

Die Ausfällung des Polymeren wird bei Temperaturen von 20 bis 110 °C, bevorzugt 50 bis 98°C, besonders bevorzugt bei 65 bis 85°C durchgeführt. Zur Fällung können alle mineralischen und organischen Säuren verwendet werden, die es gestatten die gewählten pH-Bereiche einzustellen. Mineralische Säuren werden bevorzugt zur pH-Einstellung verwendet.

Für die Fällung kann zusätzlich ein Fällungsmittel oder Fällhilfsmittel zugesetzt werden. Beispielsweise werden als zusätzliche Fällungsmittel die dem Fachmann bekannten Alkalisalze von anorganischen Säuren sowie deren Mischungen eingesetzt. Als Alkalisalze kommen insbesondere die Natrium- und Kaliumsalze folgender Säuren in Betracht: Salzsäure, Schwefelsäure, schweflige Säure, Salpetersäure, salpetrige Säure und Phophorsäure. Bevorzugt sind die Natrium- und Kaliumsalze von Salzsäure und Schwefelsäure. Besonders bevorzugt ist Natriumchlorid und Natriumsulfat. Die Fällmittel werden in einer Menge von 0,05 bis 10 Gew%, bevorzugt 0,5 bis 8 Gew%, besonders bevorzugt 1 bis 5 Gew%, bezogen auf den Feststoffgehalt der Latexdispersion zugegeben.Auch die bereits oben aufgeführten Fällhilfsmittel können hier verwendet werden.

Die so erhaltene Polymersuspension wird durch Zugabe einer wässrigen Alkalihydroxid-Lösung auf einen pH-Wert $\geq 11$ eingestellt. Bevorzugt wird der pH-Wert $\geq 11,5$ eingestellt. Als wässrige Alkalihydroxid-Lösungen werden Lösungen von Natriumhydroxid oder Kaliumhydroxid, bevorzugt Natriumhydroxid in Wasser mit einem Alkalihydroxidgehalt von 10 bis 50% eingesetzt. Die alkalische Behandlung des koagulierten Polymeren wird bevorzugt bei 60 bis 100°C, bevorzugt bei 65 bis 95°C durchgeführt. Nach der alkalischen Behandlung wird das Polymer in der dem Fachmann üblichen Weise von der Suspension abgetrennt. Auch diese Variante der Latexkoagulation kann kontinuierlich oder diskontinuierlich erfolgen, bevorzugt wird kontinuierlich gearbeitet.

Nach der Koagulation liegt der Nitrilkautschuk üblicherweise in Form sogenannter Krümel vor. Die Wäsche des koagulierten NBR wird daher auch als Krümelwäsche bezeichnet. Für diese Wäsche kann entweder entionisiertes Wasser oder nicht entionisiertes Wasser eingesetzt werden. Die Wäsche wird bei einer Temperatur im Bereich von 15 bis 90°C durchgeführt, bevorzugt bei einer Temperatur im Bereich von 20 bis 80°C. Die Menge des Waschwassers beträgt 0,5 bis 20 Gew.-Teile, bevorzugt 1 bis 10 Gew.-Teile und besonders bevorzugt 1 bis 5 Gew.-Teile bezogen auf 100 Gew.-Teile Nitrilkautschuk. Bevorzugterweise werden die Kautschukkrümel einer mehrstufigen Wäsche unterworfen, wobei die Kautschukkrümel zwischen den einzelnen Waschstufen teilweise entwässert werden. Die Restfeuchten der Krümel zwischen den einzelnen Waschstufen liegen im Bereich von 5 bis 50 Gew.%, vorzugsweise im Bereich von 7 bis 25 Gew. %. Die Zahl der Waschstufen liegt üblicherweise bei 1 bis 7, vorzugsweise bei 1 bis 3. Die Wäsche wird diskontinuierlich oder kontinuierlich durchgeführt. Vorzugsweise verwendet man ein mehrstufiges, kontinuierliches Verfahren, wobei für den schonenden Umgang mit Wasser eine Gegenstromwäsche bevorzugt ist. Nach Abschluss der Wäsche hat es sich bewährt, die Nitrilkautschuk-Krümel zu entwässern.

**Gegenstand der Erfindung** sind ferner vulkanisierbare Mischungen enthaltend mindestens einen erfindungsgemäßen Nitrilkautschuk, der auch ganz oder teilweise hydriert sein kann, und mindestens einen Vernetzer. Optional sind ferner ein oder mehrere weitere Additive enthalten.

Die Herstellung dieser vulkanisierbaren Mischungen erfolgt durch Mischen mindestens eines erfindungsgemäßen optional hydrierten Nitrilkautschuks und mindestens eines Vernetzers. Optional werden ferner ein oder mehrere weiterer Additive dazu gemischt.

Als Vernetzer kommen z.B. peroxidische Vernetzer in Frage wie Bis(2,4-dichlorbenzyl)peroxid, Dibenzoylperoxid, Bis(4-chlorbenzoyl)peroxid, 1,1-Bis(t-butylperoxy)-3,3,5-trimethylcylohexan, tert-Butylperbenzoat, 2,2-Bis(t-butylperoxy)buten, 4,4-Di-tert-butyl peroxynonylvalerat, Dicumylperoxid, 2,5-Dimethyl-2,5-di(tert-butylperoxy)hexan, tert-Butylcumylperoxid, 1,3-Bis(t-butylperoxyisopropyl) benzol, Di-tert-butylperoxid und 2,5-Dimethyl-2,5-di(tert-butylperoxy) hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Trimetylolpropantrimethacrylat, Zn-diacrylat, Zn-dimethacrylat, 1,2-Polybutadien oder N,N'-m-Phenylendimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den Nitrilkautschuk.

Als Vernetzer kann auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen. Umgekehrt kann die Vernetzung der erfindungsgemäßen Nitrilkautschuke aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, bi- oder polycyclische Amine, Guanidinderivate, Dithiophosphate, Caprolactame und Thioharnstoffderivate.

Als Dithiocarbamate können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithiocarbamat, Nickeldimethyldithiocarbamat und Zinkdiisononyldithiocarbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD),

Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzothiazol.

Als Sulfenamidderivate können zum Beispiel eingesetzt werden: N-Cyclohexyl-2-benzothiazylsulfenamid (CBS), N-tert-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert-butylsulfenamid und Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als bi- oder polycyclische Amine können zum Beispiel eingesetzt werden: 1,8-Diazabicyclo[5.4.0]undec-7-en (DBU), 1,5-Diazabicyclo[4.3.0]non-5-e n (D B N), 1,4-Diazabicyclo[2.2.2]octan (DABCO), 1,5,7-Triazabicyclo[4.4.0]dec-5-en (TBD) und 7-Methyl-1,5,7-triazabicyclo[4.4.0]dec-5-en.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdialkydithiophosphate (Kettenlänge der Alkylreste $C_2$ bis $C_{16}$), Kupferdialkyldithiophosphate (Kettenlänge der Alkylreste $C_2$ bis $C_{16}$) und Dithiophoshorylpolysulfid.

Als Caprolactam kann beispielsweise Dithiobiscaprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Bei hydroxylhaltigen Nitrilkautschuken kann als weitere Vernetzungsmethode eine Diisocyanatvernetzung verwendet werden, wobei die verwendeten Diisocyanate monomerer oder polymerer Art sein können und des Weiteren mindestens zwei Isocyanatgruppen enthalten. Als Diisocyanate können einzeln oder als Mischung beispielsweise eingesetzt werden: Toluol-2,4-diisocyanat, Toluol-2,6-diisocyanat, 4,4'-Diphenylmethandiisocyanat, 1,6- Hexamethylendiisocyanat, Methylcyclohexandiisocyanat, 4,4'-Dicyclohexylmethandiisocyanat, 1,3-Phenylendiisocyanat, 1,4-Phenylendiisocyanat, 1,5-Naphthyldiisocyanat, Xylylendiisocyanat, 4,4'-Diphenyldiisocyanat, 1,2-Ethandiisocyanat, 1,3-Propandiisocyanat, 1 , 4-Butandiisocyanat, 1,5-Pentamethylendiisocyanat, 1,6-Hexamethylendiisocyanat, 1, 4-Cyclohexandiisocyant, 1,6-Hexamethylendiisocyanat-Uretdion, 1,6-Hexamethylendiisocyanat-Biuret, 1,6-Hexamethylendiisocyanat-Isocyanurat und Isophorondiisocyanat.

Bei carboxylhaltigen Nitrilkautschuken kann als weitere Vernetzungsmethode eine polyaminische Vernetzungsmethode verwendet werden, wobei die verwendeten Polyamine mindestens 2 Aminogruppen enthalten, oder diese in-situ während der Vulkanisation gebildet werden. Als Polyamine können beispielsweise aliphatische Polyamine, wie Hexamethylendiamin, Hexamethylendiamincarbamat, Hexamethylendiamin-Zimtaldehyd-Addukte oder Hexamethylendiamin-dibenzoatsalze oder aromatische Polyamine wie 2,2-Bis(4-(4-aminophenoxy)phenyl)propan, 4,4'-Methylendianilin, m-Phenylendiamin, p-Phenylendiamin oder 4,4'-Methylen-bis(o-chloranilin) verwendet werden. Reagenzien, die mindestens 2 Hydrazideinheiten aufweisen, wie Isophtalsäuredihydrazid, Adipinsäuredihydrazid oder Sebacinsäuredihydrazid sind ebenfalls geeignet. Die genannten Zusätze als auch die Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyl-dithiocarbamat, Dipentamethylenthiuramtetrasulfid, Zinkdialkydithiophosphat, Dimorpholyldisulfid, Tellurdiethyldithio-carbamat, Nickeldibutyldithiocarbamat, Zinkdibutyldithiocarbamat, Zinkdimethyldithiocarbamat und Dithiobiscaprolactam.

Die Vernetzungsmittel und zuvor genannten Zusätze können jeweils in Mengen von ca. 0,05 bis 15 5 phr, vorzugsweise 0,1 bis 12 phr, insbesondere 0,5 bis 10 phr eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, z.B. Zinkoxid, Zinkcarbonat, Bleioxid, Magnesiumoxid, gesättigte oder ungesättigte organische Fettsäuren und deren Zinksalze, Polyalkohole, Aminoalkohole, z.B. Triethanolamin sowie Amine, z.B. Dibutylamin, Dicyclohexylamin, Cyclohexylethylamin und Polyetheramine.

Daneben können auch Anvulkanisationsverzögerer eingesetzt werden. Hierzu gehören Cyclohexylthiophthalimid (CTP), N,N'-Dinitrosopentamethylentetramin (DNPT), Phthalsäureanhydrid (PTA) und Diphenylnitrosamin. Bevorzugt ist Cyclohexylthiophthalimid (CTP).

Neben der Zugabe des oder der Vernetzer kann der erfindungsgemäße Nitrilkautschuk auch mit weiteren üblichen Kautschukadditiven gemischt werden.

Diese schließen beispielsweise die typischen und dem Fachmann bekannten Substanzen wie Füllstoffe, Füllstoffaktivatoren, Ozonschutzmittel, Alterungsschutzmittel, Antioxidationsmittel, Verarbeitungshilfsmittel, Extenderöle, Weichmacher, Verstärkungsmaterialien und Formtrennmittel ein.

Als Füllstoffe können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes ,Teflon (letzteres bevorzugt in Pulverform),oder Silikate eingesetzt werden.

Als Füllstoffaktivatoren kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3 -aminopropyltrimethoxysilan, 3 -Aminopropyltrimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10000 g/mol dar. Die Menge an Füllstoffaktivatoren beträgt üblicherweise 0 bis 10 phr, bezogen auf 100 phr des Nitrilkautschuks.

Als Alterungsschutzmittel können den vulkanisierbaren Mischungen diejenigen zugesetzt werden, die bereits im Zusammenhang mit der Latexkoagulation in dieser Anmeldung beschrieben werden. Sie werden üblicherweise in Mengen von ca. 0 bis 5 phr, bevorzugt 0,5 bis 3 phr, bezogen auf 100 phr des Nitrilkautschuks eingesetzt.

Als Formtrennmittel kommen z.B. gesättigte oder teilweise ungesättigte Fett- und Ölsäuren und deren Derivate (Fettsäureester, Fettsäuresalze, Fettalkohole, Fettsäureamide) in Betracht, weiterhin auf die Formoberfläche applizierbare Produkte, wie z.B. Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0 bis 10 phr, bevorzugt 0,5 bis 5 phr, bezogen auf 100 phr des Nitrilkautschuks eingesetzt.

Auch die Verstärkung mit Festigkeitsträgern (Fasern) aus Glas gemäß der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

**Gegenstand der Erfindung** ist ferner ein Verfahren zur Herstellung von Vulkanisaten auf Basis mindestens eines Nitrilkautschuks, der auch ganz oder teilweise hydriert sein kann, welches dadurch gekennzeichnet ist, dass man die zuvor beschriebene vulkanisierbare Mischung einer Vernetzung unterzieht, bevorzugt durch Erhöhung der Temperatur oder photochemische Aktivierung. Besonders bevorzugt erfolgt dies im Rahmen eines Formgebungsverfahren, insbesondere unter Anwendung eines Spritzgussverfahrens.

**Gegenstand der Erfindung** ist ebenso das dabei erhältliche Vulkanisat, welches bevorzugt ein Formteil darstellt und insbesondere im vorgenannten Spritzgussverfahren hergestellt wird.

Durch dieses Verfahren können eine Vielzahl von Formteilen hergestellt werden, z.B. Dichtungen, Kappen, Schläuche oder Membranen. Insbesondere eignen sich die erfindungsgemäßen Nitrilkautschuke, die auch ganz oder teilweise hydriert sein können, zur Herstellung von O-Ringdichtungen, Flachdichtungen, Wellendichtringen, Dichtmanschetten, Dichtkappen, Staubschutzkappen, Steckerdichtungen, Thermoisolierschläuchen (mit und ohne PVC-Zusatz), Ölkühlerschläuchen, Luftansaugschläuchen, Servolenkschläuchen oder Pumpenmembranen Alternativ zur direkten Herstellung von Formteilen auf Basis des erfindungsgemäßen Nitrilkautschuks ist es auch möglich, dass sich an die Herstellung des erfindungsgemäßen Nitrilkautschuks entweder (i) eine Metathese-Reaktion oder (ii) eine Metathese-Reaktion und eine nachfolgende Hydrierung oder (iii) nur eine Hydrierung anschließt. Diese Metathese- bzw. Hydrierungsreaktionen sind beide dem Fachmann hinlänglich bekannt und in der Literatur beschrieben.

Die Metathese ist beispielsweise aus WO-A-02/100941 sowie der WO-A-02/100905 bekannt und kann zum Molekulargewichtsabbau eingesetzt werden.

Eine Hydrierung kann unter Einsatz homogener oder heterogener Hydrierkatalysatoren durchgeführt werden. Es ist ferner möglich, die Hydrierung in-situ durchzuführen, d.h. in dem gleichen Reaktionsgefäß, in dem gegebenenfalls zuvor auch der Metathese-Abbau erfolgte und ohne Notwendigkeit den abgebauten Nitrilkautschuk zu isolieren. Der Hydrierkatalysator wird einfach dem Reaktionsgefäß zugesetzt.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637, DE-A-25 39 132, EP-A- 0 134 023, DE-OS- 35 41 689, DE-OS- 35 40 918, EP-A-0 298 386, DE-OS- 35 29 252, DE-OS- 34 33 392, US-A-4,464,515 **und** US-A-4,503,196**).**

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

$$(R^1_m B)_l \, M \, X_n,$$

worin M Ruthenium oder Rhodium ist, $R^1$ gleich oder verschieden sind und eine $C_1$-$C_8$ Alkylgruppe, eine $C_4$-$C_8$ Cycloalkylgruppe, eine $C_6$-$C_{15}$ Aryl-Gruppe oder eine $C_7$-$C_{15}$ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, l ist 2,3 oder 4, m ist 2 oder 3 und n ist 1,2 oder 3, bevorzugt 1 oder 3. Bevorzugte Katalysatoren sind Tris (triphenylphosphin)-rhodium(I)-chlorid, Tris(triphenylphosphin)-rhodium(III)-chlorid und Tris(dimethylsulfoxid)-rhodium (III)-chlorid sowie Tetrakis(triphenylphosphin)-rhodium-hydrid der Formel $[(C_6H_5)_3P]_4R$ h H und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers ist geeignet. Üblicherweise ist es sinnvoll, den Katalysator zusammen mit einem Co-Katalysator zu verwenden, der ein Ligand der Formel $R^1_m B$ ist, wobei $R^1$, m und B die zuvor für den Katalysator genannten Bedeutungen besitzen. Bevorzugt ist m gleich 3, B gleich Phosphor und die Reste $R^1$ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicycloalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter hydrierten Nitrilkautschuken im Sinne dieser Erfindung werden ganz oder teilweise hydrierte Nitrilkautschuke verstanden und unter Hydrierung entsprechend eine vollständige oder teilweise Umsetzung der im Ausgangs-Nitrilkautschuk vorhandenen Doppelbindungen, bevorzugt zu mindestens 50 %, besonders bevorzugt 70-100%, insbesondere bevorzugt 80-100%.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Die nach der Metathese- und/oder Hydrierungsreaktion der erfindungsgemäßen Nitrilkautschuke erhaltenen, gegebenenfalls hydrierten Nitrilkautschuke können analog zu den erfindungsgemäßen Nitrilkautschuken in vulkanisierbare Zusammensetzungen eingebracht werden und zur Herstellung von Vulkanisaten und Formteilen auf Basis solcher Vulkanisate verwendet werden.

**Beispiele**

**I Herstellung der Nitrilkautschuke A, B, C, D, E und F**

**(Erfindungsgemäße Beispiele sowie Vergleichsbeispiele)**

Die Herstellung der in den folgenden Beispielserien eingesetzten Nitrilkautschuke A-F erfolgte nach den in Tabelle 1 angegebenen Rezepturen und Polymerisationsbedingungen, wobei sämtliche Einsatzstoffe in Gew.-Teilen bezogen auf 100 Gew.-Teile der Monomermischung angegeben sind.

**Tabelle 1:**

| Nitrilkautschuk | A | B | C | D | E | F |
|---|---|---|---|---|---|---|
| | Vergleich | | Vergleich | | Vergleich | |
| Butadien | 62 | 62 | 62 | 62 | 62 | 62 |
| Acrylnitril | 38 | 38 | 38 | 38 | 38 | 38 |
| Gesamt-Wassermenge | 200 | 200 | 200 | 200 | 200 | 200 |
| Edenor® HTiCT[1] | 2,20 | 2,20 | 2,20 | 2,20 | 2,20 | 2,20 |
| t-DDM[2] | 0,30 | 0,30 | 0,50 | 0,50 | 0,75 | 0,75 |
| Trigonox NT 50[3] | 0,02 | 0,02 | 0,02 | 0,02 | 0,02 | 0,02 |
| Prämix FeSO$_4$[4] | 0,022 | - | 0,026 | - | 0,022 | - |
| Prämix FeCl$_2$[4] | - | 0,030 | - | 0,026 | - | 0,022 |
| Diethylhydroxylamin | 0,4 | 0,4 | 0,4 | 0,4 | 0,4 | 0,4 |
| Vulkanox® BKF[5] | 0,3 | 0,3 | 0,3 | 0,3 | 0,3 | 0,3 |
| | | | | | | |
| pH [6] | 1,0±1,0 | 11,0±1,0 | 11,0±1,0 | 11,0±1,0 | 11,0±1,0 | 11,0±1,0 |
| Polymerisationstemperatur [°C] | 13,0±0,5 | 13,0±0,5 | 13,0±0,5 | 13,0±0,5 | 13,0±0,5 | 13,0±0,5 |
| Polymerisationsumsatz [%] | 81,7 | 74,8 | 90,1 | 90,3 | 76,3 | 77,6 |
| Polymerisationszeit [h] | 8,5 | 7 | 7 | 7 | 7 | 7,5 |

[1] Edenor® HTiCT: selektiv gehärtete Talgfettsäure (Handelsprodukt "Edenor HTiCT" der Firma Cognis GmbH)
2) t-DDM: (tertiäres Dodecylmercaptan); Lanxess Deutschland GmbH
3) p-Menthanhydroperoxid (Trigonox NT 50 der Firma Akzo-Degussa)
4) enthaltend das Reduktionsmittel Rongalit C (Natriumsalz eines Sulfinsäurederivates) sowie das Fe(II) Salz in den unten angegebenen Mengen.
5) 2-[(2-Hydroxy-5-methyl-3-tert-butyl-phenyl)methyl]-4-methyl-6-tert-butyl-phenol; Lanxess Deutschland GmbH
6) gemessen zu Beginn der Polymerisation

Die Herstellung der Nitrilkautschuke erfolgte diskontinuierlich in einem 5L-Autoklaven mit Rührwerk. Bei den Autoklavenansätzen wurden jeweils 1,25 kg der Monomermischung und eine

Gesamtwassermenge von 2,1 kg sowie EDTA in einer äquimolaren Menge bezogen auf das Fe-II verwendet. Von der Wassermenge wurden 1,9 kg mit dem Emulgator Edenor HtiCT und Natriumhydroxid im Autoklaven vorgelegt und mit einem Stickstoffstrom gespült. Danach wurden die entstabilisierten Monomeren und die in Tabelle 1 angegebene Menge des Molekulargewichtsreglers t-DDM zugegeben und der Reaktor verschlossen. Nach der Thermostatisierung des Reaktorinhalts wurden die Polymerisationen durch die Zugabe wässriger Lösungen von erfindungsgemäßen oder nicht-erfindungsgemäßen Eisen(II)salzen (in Form von Prämix-Lösungen) und von para-Menthanhydroperoxid (Trigonox NT50) gestartet.

Die Prämix-Lösung enthielt 0,986 g Fe(II)SO$_4$ * 7 H$_2$O oder 0,845 g Fe(II)Cl$_2$ * 4 H$_2$O und 2,0 g Rongalit C auf 400g Wasser. Rechnet man das Kristallwasser aus den Eisen-Verbindungen, so erhält man für beide Prämix-Lösungen jeweils als eingesetzte Menge 0,539 g bezogen auf 400 g Wasser.

Der Polymerisationsverlauf wurde durch gravimetrische Umsatzbestimmungen verfolgt. Bei Erreichen der in Tabelle 1 angegebenen Umsätze wurde die Polymerisation durch Zugabe einer wässrigen Lösung von Diethylhydroxylamin abgestoppt. Nicht umgesetzte Monomere und sonstige flüchtige Bestandteile wurden mittels Wasserdampfdestillation entfernt.

Vor der Koagulation des jeweiligen NBR-Latex wurde dieser jeweils mit einer 50%igen Dispersion von Vulkanox® BKF (0,3 Gew. % Vulkanox® BKF bezogen auf NBR-Feststoff) versetzt. Anschließend wurde koaguliert, gewaschen und die erhaltenen Krümel getrocknet.

Die getrockneten NBR-Kautschuke wurden durch die Mooney-Viskosität, deren MSR, den ACN-Gehalt, die Glasübergangstemperatur, sowie deren Onset- und Offsetpunkt, sowie den nach der Gordon-Taylor Beziehung $T_g$ =1,4564 * [$ACN$] - 77,147 daraus errechneten Differenzwert (ΔACN) der ACN-Verteilung (ΔACN = ACN (Offset) - ACN (Onset)) charakterisiert.

Die erhaltenen Festkautschuke hatten folgende Eigenschaften (Tabelle 2):

**Tabelle 2:**

| Nitrilkautschuk | A | B | C | D | E | F |
|---|---|---|---|---|---|---|
| | Vergleich | | Vergleich | | Vergleich | |
| ACN-Gehalt (%) | 36,2 | 36,4 | 35,5 | 35,3 | 36,1 | 36,6 |
| Mooney Viskosität ML(1+4@100°C) (MU) | 134 | 142 | 80 | 76 | 30 | 25 |
| MSR (Mu/s) | 0,358 | 0,383 | 0,386 | 0,410 | 0,588 | 0,717 |
| Glasübergangstemperatur $T_G$ (°C) | -23,9 | -23,7 | -25,8 | -24,5 | -24,7 | -23,1 |
| Onset (°C) | -30,9 | -29,4 | -33,0 | -31,4 | -31,2 | -28,4 |
| Offset (°C) | -16,6 | -17,4 | -17,4 | -17,1 | -17,8 | -17,3 |
| ΔCN(Gew%) | 9,8 | 8,2 | 10,7 | 9,8 | 9,2 | 7,6 |

Tabelle 3 zeigt eindeutig, dass mit dem erfindungsgemäßen Verfahren durch Einsatz des speziellen Redox-Systems Nitrilkautschuke erhalten werden, die sich eindeutig von denjenigen Nitrilkautschuken unterscheiden, die mittels eines Redox-Systems erhalten wurden, dass sich vom erfindungsgemäß verwendeten nur durch den Einsatz von Fe-(II)-sulfat unterscheidet. Die neuen Nitrilkautschuke weisen eine deutlich einheitlichere Monomerverteilung auf, was aus den geringeren ΔACN Werte in den Polymeren eindeutig hervorgeht. Die sichtlich höheren MSR-Werte der erfindungsgemäßen Nitrilkautschuke zeigen ferner, dass die erfindungsgemäßen Nitrilkautschuke eine deutlich geringere Langkettenverzweigung aufweisen.

## II Herstellung der Nitrilkautschukterpolymere G und H

### (Erfindungsgemäßes Beispiel sowie Vergleichsbeispiel)

Die Herstellung der in den folgenden Beispielserien eingesetzten Nitrilkautschuke G und H erfolgte nach der in Tabelle 3 angegebenen Basisrezeptur, wobei sämtliche Einsatzstoffe in Gew.-Teilen bezogen auf 100 Gew.-Teile der Monomermischung angegeben sind. Tabelle 3 nennt auch die jeweiligen Polymerisationsbedingungen.

**Tabelle 3:**

| Nitrilkautschuk | G | H |
|---|---|---|
| Butadien | 61,4 | 61,4 |
| Acrylnitril | 36 | 36 |
| 2-Hydroxethylmethacrylat | 2,6 | 2,6 |

(fortgesetzt)

| Nitrilkautschuk | G | H |
|---|---|---|
| Gesamt-Wassermenge | 220 | 220 |
| Texapon® K-12[1] | 3,0 | 3,0 |
| $Na_2SO_4$ | 0,12 | 0,12 |
| t-DDM[2] | 0,54 | 0,54 |
| Trigonox NT 50[3] | 0,02 | 0,02 |
| Prämix $FeSO_4$[4] | 0,030 | - |
| Prämix $FeCl_2$[4] | - | 0,030 |
| Diethylhydroxylamin | 0,2 | 0,2 |
| Winstay 29 / Naugawhite[5] | 0,18 | 0,18 |
| | | |
| pH | 7,0±1,0 | 7,0±1,0 |
| Polymerisationstemperatur [°C] | 8,0±0,5 | 8,0±0,5 |
| Polymerisationsumsatz [%] | 86,1 | 84,2 |
| Polymerisationszeit [h] | 7,0 | 6,5 |

[1] Texapon® K-12: Natrium-Laurylsulfat (Handelsprodukt "Texapon K-12" der Firma Cognis GmbH)
[2] t-DDM: (tertiäres Dodecylmercaptan); Lanxess Deutschland GmbH
[3] p-Menthanhydroperoxid (Trigonox NT 50 der Firma Akzo-Degussa)
[4] Zusammensetzung wie in Tabelle 1 sowie oben im Text angegeben
[5] Mischung aus 25 g Sorbilene Mix (Mischung aus Sorbitanestem und Ethoxylierten Sorbitanestem) der Firma Lamberti, 38g Naughawhite (2,2'-Methylenbis(6-nonyl-p-cresol) der Firma Chemtura), 125g Wingstay 29 (styrolisiertes Diphenylamin) der Firma Eliokem und 63 g Wasser

Die erhaltenen Festkautschuke hatten die in Tabelle 4 angegebenen Eigenschaften, die wie für die Beispielserien A bis F angegeben bestimmt wurden.

**Tabelle 4:**

| Nitrilkautschuke | G | H |
|---|---|---|
| ACN-Gehalt (%) | 32,2 | 35,0 |
| Mooney Viskosität ML(1+4@100°C) (Mu) | 30 | 25 |
| MSR (Mu/s) | 0,578 | 0,633 |
| Einbau Termonomer (Gew%)[1] | 1,4 | 1,7 |
| Glasübergangstemperatur $T_G$ (°C) | -34,5/-22,0 | -23,9 |
| Onset (°C) | -38,9/-25,9 | -29,4 |
| Offset (°C) | -29,1/-17,5 | -17,2 |

(fortgesetzt)

| Nitrilkautschuke | G | H |
|---|---|---|
| $\Delta$ACN (Gew%) | 12,5[2] | 8,4 |

[1] Bestimmt durch $^1$H-NMR Analyse
[2] Als Summe der einzelnen Selektivitäten von $\Delta$ACN(1) + $\Delta$ACN (1) = $\Sigma\Delta$ACN

Tabelle 5 zeigt hier, dass die mit dem speziellen Fe-(II)-chlorid basierten Redoxsystem erhaltenen Nitrilterpolymere eindeutig eine einheitlichere Monomerverteilung aufweisen (zu erkennen an den geringeren $\Delta$ACN Werten in den Polymeren) und ebenso eine geringere Langkettenverzweigung, (ersichtlich an dem höheren MSR Wert). Für Vergleichsbeispiel G wurden zwei Glasübergangstemperaturen gemessen: Hieraus ist zu schlussfolgern, dass der nicht erfindungsgemäße Einsatz von Fe(II)(SO$_4$) nicht zu einem einheitlichen Copolymer führt, sondern vielmehr Polymere gebildet werden, die sich bezüglich der Monomerverteilung derart stark unterscheiden, dass zwei Tg Werte gemessen wurden.

**III Herstellung von Vulkanisaten der Nitrilkautschuke E und F**

**(Erfindungsgemäßes Beispiel sowie Vergleichsbeispiel)**

Gemäß der unten beschriebenen Methode wurden aus den Nitrilkautschuken E und F die Vulkanisate V1 und V2 hergestellt. Die Bestandteile der Mischungen sind auf 100 Teile Kautschuk bezogen und in Tabelle 5 angegeben.

**Tabelle 5:**

| Mischung | | V1 | V2 (Vergleich) |
|---|---|---|---|
| Polymer F | | 100 | |
| Polymer E | | | 100 |
| Ruß IRB 7[1] | | 40 | 40 |
| Edenor® C 18 98-100[2] | | 1 | 1 |
| SULFUR SPIDER[3] | | 1,54 | 1,54 |
| VUI,KACIT® NZ/EGC[4] | | 0,7 | 0,7 |
| IRM 91[5] | | 3 | 3 |
| | | | |
| Total | phr | 146,24 | 146,24 |
| Dichte | g/cm$^3$ | 1,168 | 1,168 |

[1] IRB 7: Ruß (Sid Richardson Carbon Co.)
[2] Edenor® C 18 98-100: Stearinsäure (Caldic)
[3] SULFUR SPIDER: Schwefel (S$_8$) (Krahn Chemie GmbH)
[4] VULKACIT® NZ/EGC: N-tert.-Butyl-2-benzothiazolsulfenamid (TBBS) (Lanxess Deutschland GmbH)
[5] IRM 91: Zink(II)oxid: (Midwest Zinc)

Die Mischungen wurden in einem Banbury Mixer hergestellt. Hierzu wurden der Kautschuk und alle in Tabelle 5 genannten Zuschlagstoffe insgesamt 4 Minuten bei einer maximalen Temperatur von bis zu 120 °C gemischt. Der Kautschuk wurde hierzu im Mischer vorgelegt, nach 1 Minute alle weiteren Zuschlagstoffe hinzugegeben und nach 2 weiteren Minuten ein Kehrschritt durchgeführt. Nach insgesamt 4 Minuten wurde der Kautschuk aus dem Mischer ausgeworfen. Die erhaltenen Vulkanisate hatten die in den Tabellen 6 und 7 angegebenen Eigenschaften.
Der Vulkanisationsverlauf am MDR und dessen analytischen Daten wurden an einem Monsanto-Rheometer MDR 2000 nach ASTM D5289-95 gemessen.

**Tabelle 6:**

| Mischung | V1 | V2 (Vergleich) |
|---|---|---|
| MDR (130 °C/60min) | | |
| Max. Drehmoment(dNm) | 19,06 | 20,43 |
| $t_{10}$ (min) | 14,70 | 14,30 |
| $t_{95}$ (min) | 44,10 | 41,83 |
| MDR (170 °C/30min) | | |
| Max. Drehmoment(dNm) | 17,85 | 19,22 |
| $t_{10}$ (min) | 1,29 | 1,31 |
| $t_{95}$ (min) | 5,87 | 4,91 |

Entsprechend der geringeren Verzweigung des Polymers F liegt das maximale Drehmoment gegenüber dem Vulkanisat des Vergleichspolymer E geringfügig niedriger, jedoch auch auf einem sehr guten Niveau.

Das erfindungsgemäße Polymer F zeichnet sich durch deutlich verbesserte Fließeigenschaften aus, die eine wichtige Verarbeitungskenngröße darstellen. Diese kann über entsprechende Rheovulkameter Messungen gezeigt werden. Das Rheovulkameter dient allgemein zur Prüfung des Verarbeitungsverhaltens von Kautschukmischungen (injection moulding).

Es wurde eine exakt gewogene Mischungsprobe mit den in Tabelle 5 für V1 bzw. V2 angegebenen Zusammensetzungen in einen Vorratsraum eingelegt und mittels eines Kolbens durch eine Düse in eine beheizte Prüfform eingespritzt. Tabelle 8 zeigt die Parameter und die Ergebnisse der Rheovulkameter Messung:

**Tabelle 7:**

| Mischung | | V1 | V2 |
|---|---|---|---|
| **Rheovulkameter** | | | |
| Vorwärmtemperatur (°C) | 100 | | |
| Vorwärmzeit (sec) | 100 | | |
| Spritzdruck (bar) | 97 | | |
| Kolbentemperatur (°C) | 100 | | |
| Düsentemperatur (°C) | 100 | | |
| Einspritzzeit (sec) | 20 | | |
| Vulkanisationszeit (min) | 5 | | |
| Vulkanisationstemperatur (°C) | 180 | | |
| Spritzvolumen ($cm^3$) | | 2,02 | 1,85 |
| Spritzgeschwindigkeit ($cm^3$/sec) | | 0,099 | 0,091 |
| Füllgrad (%) | | 65,5 | 59,4 |

**Patentansprüche**

1. Verfahren zur Herstellung von Nitrilkautschuken durch Emulsionspolymerisation mindestens eines $\alpha,\beta$-ungesättigten Nitrils, mindestens eines konjugierten Diens und gegebenenfalls einem oder mehreren weiteren copolymerisierbaren Monomeren, **dadurch gekennzeichnet, dass** die Emulsionspolymerisation unter Einsatz eines Redox-Systems duchgeführt wird, welches

    (i) als Oxidationsmittel mindestens eine Peroxoverbindung,
    (ii) mindestens ein Reduktionsmittel und
    (iii) Fe-II-Chlorid

    enthält.

2. Verfahren nach Anspruch 1, wobei als Oxidationsmittel (i) Wasserstoffperoxid, Peroxodisulfate, Peroxodiphosphate, Hydroperoxide, Persäuren, Persäureester, Persäureanhydride oder Peroxide mit zwei organischen Resten eingesetzt werden.

3. Verfahren nach Anspruch 1, wobei als Oxidationsmittel (i) Natrium-, Kalium- oder Ammoniumsalze der Peroxodischwefelsäure oder Peroxodiphosphorsäure, t-Butylhydroperoxid, Cumolhydroperoxid, Pinanhydroperoxid, p-Menthanhydroperoxid, Dibenzoylperoxid, 2,4,-Dichlorbenzoylperoxid, Di-t-butylperoxid, Dicumylperoxid, t-Butylperbenzoat oder t-Butylperacetat eingesetzt werden.

4. Verfahren nach einem der Ansprüche 1 bis 3, wobei als Reduktionsmittel (ii) Natriumformaldehydsulfoxylat, Natriumbenzaldehydsulfoxylat, reduzierende Zucker, Ascorbinsäure, Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate, bevorzugt Anilin, Dimethylanilin, Monoethanolamin, Diethanolamin oder Triethanolamin, eingesetzt werden.

5. Verfahren nach einem der Ansprüche 1 bis 4, wobei die Emulsionspolymerisation in Gegenwart von Natriumethylendiamintetraacetat (EDTA), Natriumsilicat, Natriumpyrophosphat oder Natriumpolyphosphat oder Trinatriumphosphat durchgeführt wird.

6. Verfahren nach einem der Ansprüche 1 bis 5, wobei als Oxidationsmittel (i) Pinanhydroperoxid oder p-Menthanhydroperoxid, als Reduktionsmittel (ii) Natriumformaldehydsulfoxylat und Fe-II-Chlorid in Form von $FeCl_2$*4 $H_2O$ eingesetzt wird und zusätzlich EDTA bei der Emulsionspolymerisation verwendet wird.

7. Verfahren nach einem der Ansprüche 1 bis 6, wobei sich an die Emulsionspolymerisation entweder (i) eine Metathese-Reaktion zum Molekulargewichtsabbau oder (ii) eine Metathese-Reaktion zum Molekulargewichtsabbau und eine nachfolgende Hydrierung oder (iii) nur eine Hydrierung anschließt.

8. Nitrilkautschuke mit Wiederholungseinheiten abgeleitet von mindestens einem $\alpha,\beta$ungesättigten Nitril, mindestens einem konjugierten Dien und gegebenenfalls einem oder mehreren weiteren copolymerisierbaren Monomeren, erhältlich durch Emulsionspolymerisation mindestens eines $\alpha,\beta$-ungesättigten Nitrils, mindestens eines konjugierten Diens und gegebenenfalls einem oder mehreren weiteren copolymerisierbaren Monomeren unter Einsatz eines Redox-Systems enthaltend

  (i) als Oxidationsmittel mindestens eine Peroxoverbindung,
  (ii) mindestens ein Reduktionsmittel und
  (iii) Fe-II-Chlorid.

9. Nitrilkautschuke erhältlich aus den Nitrilkautschuken nach Anspruch 8, indem man diese zusätzlich einer Metathese-Reaktion unterwirft.

10. Hydrierte Nitrilkautschuke erhältlich aus den Nitrilkautschuken nach Anspruch 8, indem man diese einer Hydrierreaktion unterwirft.

11. Hydrierte Nitrilkautschuke erhältlich aus den Nitrilkautschuken nach Anspruch 8, indem man diese einer Metathese-Reaktion und einer nachfolgenden Hydrierung unterwirft.

12. Vulkanisierbare Mischungen enthaltend den Nitrilkautschuk nach Anspruch 8 oder 9 oder den hydrierten Nitrilkautschuk nach Anspruch 10 oder 11 sowie mindestens einen Vernetzer.

13. Vulkanisierbare Mischungen nach Anspruch 12 enthaltend zusätzlich mindestens einen Füllstoff.

14. Verfahren zur Herstellung von Vulkanisaten, **dadurch gekennzeichnet, dass** die vulkanisierbare Mischung nach Anspruch 12 einer Vernetzung unterzogen wird, bevorzugt durch Erhöhung der Temperatur oder photochemische Aktivierung.

15. Vulkanisate erhältlich nach dem Verfahren gemäß Anspruch 14.

Europäisches Patentamt

European Patent Office

Office européen des brevets

## EUROPÄISCHER RECHERCHENBERICHT

Nummer der Anmeldung

EP 09 17 4921

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2008/293868 A1 (OBRECHT WERNER [DE]) 27. November 2008 (2008-11-27) * Absätze [0094] - [0096]; Tabelle 1 * ----- | 1-15 | INV. C08C19/02 C08C19/08 C08F2/22 |
| A | US 2002/091189 A1 (SAKATA KATSUHIKO [JP] ET AL) 11. Juli 2002 (2002-07-11) * Absatz [0060]; Beispiele 1-5 * ----- | 1-15 | C08F4/40 C08F4/42 C08F4/60 C08F20/44 |
| A | EP 0 704 480 A1 (NIPPON ZEON CO [JP]) 3. April 1996 (1996-04-03) * Beispiele 1-8 * ----- | 1-15 | C08L9/02 C08L15/00 |
| A | US 3 322 746 A (WALTER NUDENBERG ET AL) 30. Mai 1967 (1967-05-30) * Spalte 2, Zeilen 23-65 * ----- | 1-15 | |

RECHERCHIERTE SACHGEBIETE (IPC)

C08C
C08F
C08L

Der vorliegende Recherchenbericht wurde für alle Patentansprüche erstellt

| Recherchenort | Abschlußdatum der Recherche | Prüfer |
|---|---|---|
| München | 27. Mai 2010 | Adams, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 17 4921

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2010

| Im Recherchenbericht angeführtes Patentdokument | Datum der Veröffentlichung | Mitglied(er) der Patentfamilie | Datum der Veröffentlichung |
|---|---|---|---|
| US 2008293868 A1 | 27-11-2008 | CA 2687487 A1<br>CN 101679531 A<br>DE 102007024010 A1<br>EP 2152758 A1<br>WO 2008142039 A1<br>KR 20100022077 A | 27-11-2008<br>24-03-2010<br>27-11-2008<br>17-02-2010<br>27-11-2008<br>26-02-2010 |
| US 2002091189 A1 | 11-07-2002 | CA 2361897 A1<br>EP 1205499 A2<br>JP 2002206011 A | 13-05-2002<br>15-05-2002<br>26-07-2002 |
| EP 0704480 A1 | 03-04-1996 | CA 2152425 A1<br>DE 69501538 D1<br>DE 69501538 T2<br>JP 3477849 B2<br>JP 8100082 A<br>US 5556919 A | 31-03-1996<br>05-03-1998<br>10-09-1998<br>10-12-2003<br>16-04-1996<br>17-09-1996 |
| US 3322746 A | 30-05-1967 | DE 1301492 B<br>GB 1018347 A | 21-08-1969<br>26-01-1966 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0692496 A
- EP 0779301 A
- EP 0779300 A
- US 2451180 A
- US 2897167 A
- US 2968645 A
- US 2716107 A
- DD 154702
- US 4826721 A
- WO 02100941 A
- WO 02100905 A
- US 3700637 A

- DE 2539132 A
- EP 0134023 A
- DE 3541689 A
- DE 3540918 A
- EP 0298386 A
- DE 3529252 A
- DE 3433392 A
- US 4464515 A
- US 4503196 A
- EP 0471250 A
- US 4631315 A
- US 6683136 A

**In der Beschreibung aufgeführte Nicht-Patentliteratur**

- Ullmann's Encyclopedia of Industrial Chemistry. VCH Verlagsgesellschaft, 1993, 255-261
- **Harzsäure.** Ullmann's Encyclopedia of Industrial Chemistry. vol. 31, 345-355

- **Castoroil ; Baumwollsaat ; Erdnussöl ; Leinsamenöl ; Kokosnussfett ; Palmkernöl ; Olivenöl ; Rapsöl ; Sojabohnenöl ; Fischöl.** Ullmann's Encyclopedia of Industrial Chemistry. vol. 13, 75-108
- **W. Hofmann.** *Rubber Chem. Technol.,* 1963, vol. 36, 1